# EUROPÄISCHE PATENTSCHRIFT

(11) **EP 0 752 971 B1**
(45) Veröffentlichungstag und Bekanntmachung des Hinweises auf die Patenterteilung: **06.06.2001**
(21) Anmeldenummer: 96900515.6
(22) Anmeldetag: 17.01.1996
(51) Int. Cl.: B65G 37/02

(54) **MODULARE FLIESSFERTIGUNGSANLAGE**
MODULAR CONTINUOUS PRODUCTION FACILITY
INSTALLATION MODULAIRE DE PRODUCTION EN CONTINU

(30) Priorität: 10.02.1995 DE 19504457
(43) Veröffentlichungstag der Anmeldung: 15.01.1997
(73) Patentinhaber: ROBERT BOSCH GMBH, 70442 Stuttgart (DE)
(72) Erfinder: LEISNER, Ernst, D-71638 Ludwigsburg (DE); OST, Sven, D-70192 Stuttgart (DE)
(86) Internationale Anmeldenummer: DE9600049
(87) Internationale Veröffentlichungsnummer: WO9624545

(56) Entgegenhaltungen:
- EP-A- 0 013 733
- EP-A- 0 430 739
- EP-A- 0 463 878
- EP-A- 0 623 533
- DE-A- 3 700 192
- DE-A- 4 010 024
- DE-A- 4 229 067
- IBM TECHNICAL DISCLOSURE BULLENTIN, Bd. 27, Nr. 6, November 1984, Seiten 3508-3509, XP002001676 J. SYKORA: "modular conveyor system"

## Beschreibung

### Stand der Technik

Die Erfindung geht aus von einer modularen Fließfertigungsanlage nach der Gattung des Hauptanspruchs. Eine derartige Fließfertigungsanlage geht aus der DE-OS 42 29 067 hervor, bei der eine Mehrzahl von in Längsrichtung hintereinander angeordneter Module gleicher Länge mit jeweils einer Hin- und Rücktransportstrecke einen Hauptumlaufbahnabschnitt bilden. Die je eine Hin- und Rücktransportstrecke aufweisenden Module bilden ein Basismodul, an welches gegebenenfalls jeweils ein Nebenbahnabschnitt als Nebenschlußmodul ankoppelbar ist. Das Nebenschlußmodul ist mit zwei parallel zueinander und gegenläufige Transportrichtung aufweisende Quertransportbahnen und mit einer zwischen den Quertransportbahnen verlaufenden Nebentransportstrecke ausgeführt.

Aus der EP-A-623 533 geht eine Fließfertigungsanlage hervor mit Transportstrecken, die über Umlenkeinheiten miteinander verbunden sind. Die Transportstrecken sind mit den Umlenkeinheiten fest verkettet, denn eine einzige Antriebseinheit triebt die Riemen von mehreren Transportstrecken an.

Durch diese feste Verkettung sind die Transportstrecken nicht modular ankoppelbar. Soll die Fließfertigungsanlage umgebaut werden, so ist der Aufwand sehr groß.

In der EP-A-463 878 ist ein modularer Aufbau einer Fließfertigungsanlage offenbart, bei der eine im Vergleich mit dem Anmeldegegenstand größere Anzahl von einzelnen Modulen entsteht. Die Flexibilität ist sehr groß, allerdings auch der Montageaufwand bei einem Umbau, da viele Module aneinander gekoppelt werden müssen.

Aufgabe der vorliegenden Erfindung ist es, Strecken und Module einer Fließfertigungsanlage zu optimieren, so daß die Flexibilität maximiert wird und der Montageaufwand minimiert.

Gelöst wird diese Aufgabe mit den kennzeichnenden Merkmale der Ansprüche 1 und 9.

### Vorteile der Erfindung

Die erfindungsgemäße modulare Fließfertigungsanlage besitzt den Vorteil, daß mit einer überschaubaren Anzahl von Modulen mit eindeutig definierter Funktionalität individuelle Fließfertigungsanlagen mit einer freien Wahl in den Hauptabmessungen ausführbar sind. Durch einen Austausch von Stationsmodulen, zum Beispiel im Falle einer nachträglichen Höherautomatisierung mit dem Ersetzen von Handarbeitsstationen durch Automatikstationen, wird der Hauptumlauf der Fließfertigungsanlage nicht beeinflußt. Während eines Austausches eines Stationsmoduls zum Zwecke der Umrüstung einzelner Arbeitsplätze kann sogar der Betrieb mit den nicht betroffenen Stationen aufrechterhalten werden. Hieraus resultiert eine variantenreiche Fließfertigung beziehungsweise Montage mit erheblichem Produktivitätsgewinn.

Für die Montage eines neuen Erzeugnisses können die autarken Module ohne spezielle Kenntnis innerhalb kurzer Zeit zu einer grundlegend neuen Fließfertigungsanlage zusammengestellt sowie um weitere Module beziehungsweise Bearbeitungsstationen ergänzt werden. Der Anlagenbetreiber ist dabei lediglich an sein einmal gewähltes Rastermaß der Stationsmodultiefe gebunden, daß von der einheitlichen Länge seiner Aus- und Einschleusmodule bestimmt wird. Die Stationsbreite kann vollkommen frei gewählt werden. Aus dem hohen Wiederverwendungsgrad und der einfachen Kombinierbarkeit der Module ergeben sich stark reduzierte Investionskosten beim Umrüsten der Fließfertigungsanlage auf neue Erzeugnisse.

Durch die in den Unteransprüchen aufgeführten Maßnahmen sind vorteilhafte Weiterbildungen und Verbesserungen der im Hauptanspruch angegebenen modularen Fließfertigungsanlage möglich. Die Umrüstbarkeit der Fließfertigungsanlage läßt sich durch die Ausbildung der Hauptumlaufbahnabschitte als auswechsekbare Streckenmodule weiter erhöhen. Eine Verkürzung der Durchlaufzeit der Werkstückträger läßt sich dadurch erreichen, wenn die Aus- und Einschleusstrecken Übergabestellen besitzen, die eine unmittelbare Übergabe beziehungsweise Weiterleitung der Werkstücksträger zum nächsten Stationsmodul ermöglichen. Zweckmäßig läßt sich eine derartige Übergabeeinheit durch zwei in Förderrichtung hintereinander angeordnete Hub/Quereinheiten realisieren.

### Zeichnung

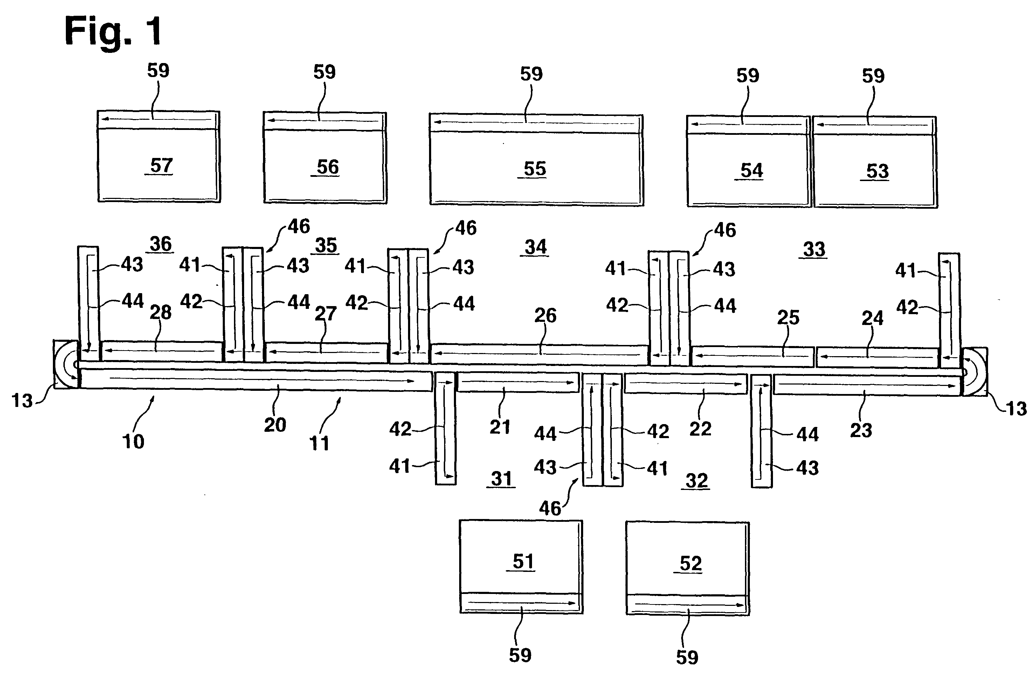

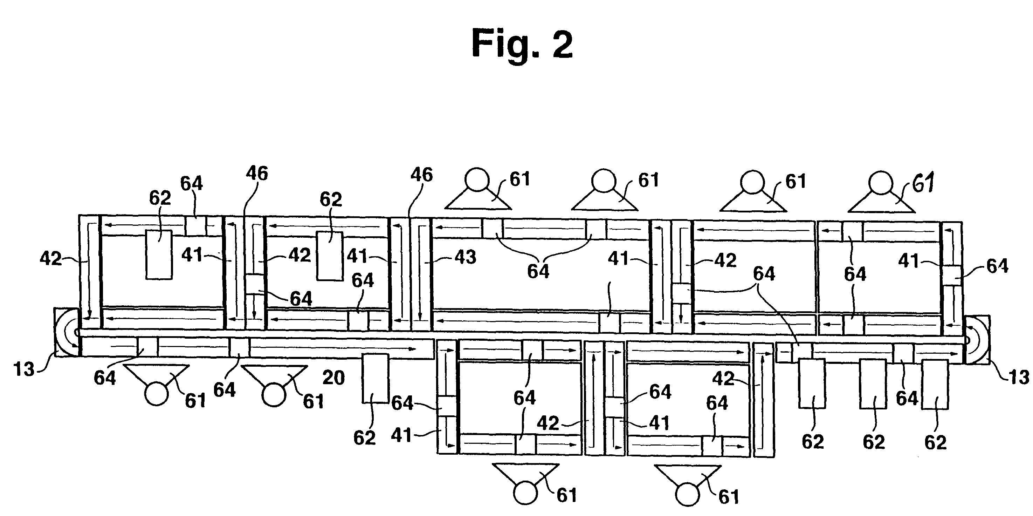

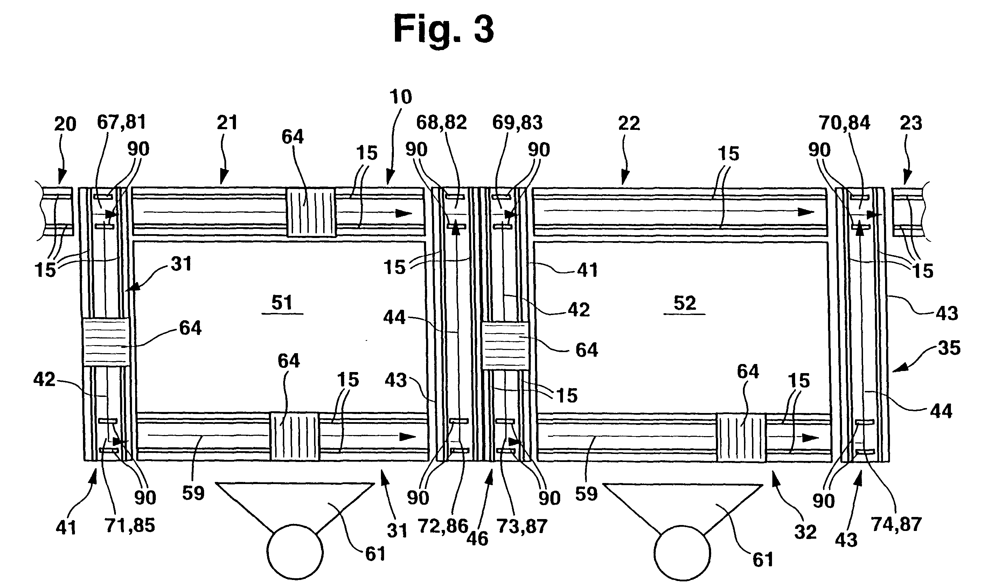

Ein Ausführungsbeispiel der Erfindung ist in der Zeichnung dargestellt und in der nachfolgenden Beschreibung näher erläutert. Es zeigen Figur 1 eine Draufsicht auf Module für eine Fließfertigungsanlage, Figur 2 eine Draufsicht auf die aus den Modulen der Figur 1 zusammengesetzte Fließfertigungsanlage und Figur 3 eine vergrößerte Draufsicht auf zwei unmittelbar benachbarte Nebenbahnabschnitte.

### Beschreibung des Ausführungsbeispiels

Figur 1 zeigt eine Hauptumlaufbahn 10 mit einer Hintransportstrecke 11 und einer Rücktransportstrecke 12, die parallel zueinander angeordnet sind. An den beiden Enden der Hin- und Rücktransportstrecke 11, 12 ist jeweils ein Umlenkmodul 13 angeordnet. Die Hauptumlaufbahn 10 ist aus mehreren hintereinander angeordneten Streckenmodulen 20 bis 28 ausgebildet, wobei die Streckenmodule 20, 21, 22 und 23 die Hintransportstrecke 11 und die Streckenmodule 24, 25, 26, 27 und 28 die Rücktransportstrecke 12 bilden.

Im vorliegenden Ausführungsbeispiel ist das Transportsystem der beiden Transportstrecken 11, 12 ein Doppelgurtförderer, wobei jeder Streckenmodul 20 bis 28 beispielsweise über einen eigenen Antrieb für die Transportbänder des Doppelgurtförderers verfügt. Es ist aber genauso denkbar, andere Transportsysteme zu verwenden.

Entlang der Hintransportstrecke 11 ist ein erster und ein zweiter Nebenbahnabschitt 31, 32 sowie entlang der Rücktransportstrecke 12 ein dritter, vierter, fünfter und sechster Nebenbahnabschnitt 33 bis 36 angeordnet. Die Nebenbahnabschitte 31 bis 36 werden jeweil von einem Ausschleusmodul 41 mit einer Ausschleusstrecke 42 und einem Einschleusmodul 43 mit einer Einschleusstrecke 44 sowie mindestens einem zwischen den Aus- und Einschleusmodulen 41, 43 angeordneten Stationsmodul 51 bis 57 mit jeweil einer Nebenbahntransportstrecke 59 gebildet. Die Ausschleusmodule 41 und die Einschleusmodule 43 sind beispielsweise rechtwinklig zwischen zwei aufeinanderfolgenden Steckenmodulen 21 bis 28 angeordnet.

Das Einschleusmodul 43 und das Ausschleusmodul 41 zweier angrenzender Nebenbahnabschnitte sind zu einem Ein/Ausschleusmodul 46 zusammengefaßt. Die Ausschleusstrecken 42, die Einschleusstrecken 44 und die Nebentransportstrecken 59 sind gemäß Figur 3 ebenfalls mit jeweils einem Doppelgurtförderer mit zwei parallel verlaufenden Transportbändern 15 ausgeführt.

Die dargestellte Fließfertigungsanlage verwendet Stationsmodule 51 bis 57 mit zwei unterschiedlichen Abmessungen, wobei die Stationsmodule 51, 52, 53, 54, 56 und 57 die gleiche Abmessung aufweisen. Das Stationsmodul 55 ist im vorliegenden Ausführungsbeispiel in Förderrichtung länger ausgeführt. Zur modularen Vielfalt trägt ferner bei, daß die Nebenbahnabschnitte 31 bis 37 mit mehr als einem Stationsmodul 51 bis 57 ausgeführt sein können. So ist beispielsweise der Nebenbahnabschnitt 33 mit den Stationsmodulen 53 und 54 ausgerüstet, die eine gleiche Länge besitzten. Es ist aber auch denkbar sowohl mehr als zwei Staionsmodule in einem Nebenbahnabschnitt als auch Stationsmodule unterschiedlicher Länge in einen Nebenbahnabschnitt einzusetzen.

Die Anordnung der Module gemäß Figur 1 mit Bearbeitungsstationen 61, 62 zeigt Figur 2, wobei mit 61 Handarbeitsplätzen und mit 62 Automatikstationen bezeichnet sind. Von dem in Figur 1 und 2 nicht näher dargestellten Transportbändern 15 des Doppelgurtfördersystems werden in der angegebenen Pfeilrichtung mit Teilen bzw. Baugruppen beladene Werkstückträger 64 von Bearbeitungsstation zu Bearbeitungsstation transportiert. In den Bearbeitungsstationen 61, 62 werden die Werkstückträger 64 von nicht darsgestellten Stoppeinrichtungen angehalten und positioniert.

Die Nebenbahnabschnitte 31 und 32 in vergrößerter Draufsicht gehen aus Figur 3 hervor. Entlang der Hauptumlaufbahn 10 sind in Förderrichtung der Werkstückträger 64 eine erste Ausschleusstelle 67 mit einer ersten Übergabeinheit 81, eine erste Einschleusstelle 68 mit einer zweiten Übergabeeinheit 82, eine zweite Ausschleusstelle 69 mit einer dritten Übergabeinheit 83 und eine zweite Einschleusstelle 70 mit einer vierten Übergabeinheit 84 vorgesehen. An den der entsprechenden Übergabeinheit 81, 82, 83, 84 gegenüberliegenden Enden besitzen die Aus- und Einschleusstrecken 42, 44 des Ausschleussmoduls 41, des Ein/Ausschleusmoduls 46 und des Einschleusmoduls 43 jeweils Übergabestellen 71, 72, 73, 74 mit jeweils einer weiteren Übergabeeinheit 85, 86, 87 und 88.

Die Übergabeeinheiten 81 bis 88 sind beispielsweise Hub/Quereinheiten, die zwischen den Transportbändern 15 der Doppelgurtförderer der Aus- und Einschleusstrecken 42, 44 angeordnet sind und die beispielsweise jeweils zwei Umsetzbänder 90 aufweisen. Die Förderrichtung der Umsetzbänder 90 verläuft quer zur Förderrichtung der Transportbänder 15 der Aus- und Einschleusstrecken 42, 44. Die Ebene der Umsetzbänder 90 der Übergabeeinheiten 81 bis 88 sind über und unter die Ebene der Transportbänder 15 der Aus- und Einschleusstecken 42, 44 heb- beziehungsweise senkbar.

Die Übergabeeinheiten 81 bis 88 sind ferner mit nicht dargestellte Stoppeinrichtungen zum wahlweisen Anhalten der Werkstückträger 64 ausgerüstet. In Transportrichtung vor jeder Übergabeeinheit 81 bis 88 ist ferner jeweils ein ebenfalls nicht dargestellter Vereinzeler positioniert, der die Werkstückträger 64 zur Weiterleitung in die Aus- und Einschleusstellen 67 bis 70 sowie in die Übergabestellen 71 bis 74 nur freigibt, wenn die jeweilige Übergabeeinheit 81 bis 88 nicht bereits durch einen anderen Werkstückträger 64 belegt ist.

Gemäß Figur 3 gelangt ein vom Transportband 15 des Streckenmoduls 20 herantransportierter Werkstückträger 64 zur ersten Ausschleusstelle 67. Soll der Werkstückträger 64 zum Handarbeitsplatz 61 des ersten Nebenbahnabschitts 31 ausgeschleust werden, wird die Stoppeinrichtung der ersten Übergabeeinheit 81 aktiviert und die Umsetzbänder 90 der Übergabeeinheit 81 unterhalb der Ebene der Transportbänder 15 der Ausschleusstrecke 42 positioniert. Der Werkstückträger 64 wird dann von der in der ersten Übergabestelle 71 positionierten Übergabeinheit 85 angehoben und von den Umsetzbändern 90 der Übergabeeinheit 85 über die Ausschleusstrecke 42 zur Nebentransportstrecke 59 des Stationsmoduls 51 geleitet. Am Handarbeitsplatz 61 des ersten Stationsmoduls 51 wird der Werkstückträger 64 zum Ausführen der Montagearbeiten beispielsweise mit ebenfalls einer Stoppeinrichtung positioniert und nach Ausführung der Arbeiten freigegeben. Der Werkstückträger 64 gelangt dann zur zweiten Übergabestelle 72, von wo aus der Werkstückträger 64 entweder von der Einschleusstrecke 44 des Ein/Ausschleusmoduls 46 in Richtung der Hauptumlaufbahn 10 zur Einschleusstelle 68 transportiert oder der dritten Übergabestelle 73 übergeben wird. Die Weiterleitung zur Übergabestelle 73 ist dann sinnvoll, wenn eine Bearbeitung im Stationsmodul 52 erforderlich ist. Dadurch wird auf ein Einschleusen und ein nachfolgendes Wiederausschleusen des Werkstückträgers 64 verzichtet, wodurch die Umlaufzeit des Werkstückträgers 64 verkürzt wird. Darüberhinaus können die Einschleusstrecke 44 und die Auschleusstrecke 42 des Ein/Ausschleusmoduls 46 als Pufferspeicher für die Werkstückträger 64 genutzt werden.

Es ist aber genauso möglich, den Werkstückträger 64 in der Übergabestelle 72 über die Einschleusstrecke 44 des Ein/Anschlußmoduls 46 zur Einschleusstelle 68 zu leiten und von der dort angeordneten Übergabeeinheit 82 zur zweiten Ausschleusstelle 69 zu übergeben. Dort kann der Werkstückträger 64 von der in der Ausschleusstelle 69 positionierten Übergabeeinheit 83 entweder geradeaus zum Streckenmodul 22 weitergeleitet werden oder von der Übergabeeinheit 83 des Ein/Ausscheusmoduls 46 in den Nebenbahnabschnitt 32 ausgeschleust werden.

Soll in der ersten Ausschleusstelle 67 eine Geradeausfahrt des Werkstückträger 64 erfolgen, werden die Umsetzbänder 90 der Übergabeeinheit 81 über die Ebene der Transportbänder der Ausschleusstrecke 42 angehoben und der Werkstückträger 64 von den Umsetzbändern 90 der Übergabeeinheit 81 erfaßt und an die Transportbänder 15 des Streckenmoduls 21 weitergegeben. Der Werkstückträger 64 gelangt dann zum Ein/Ausschleusmodul 46. Dort wird der Werkstückträger 64 von den Umsetzbändern 90 der in der Einschleusstelle 68 positionierten Übergabeeinheit 82 über die Transportbänder 15 der Einschleusstrecke 44 des Ein/Ausschleusmoduls 46 geführt und an die zweite Ausschleusstelle 69 übergeben. In der zweiten Ausschleusstelle 69 wird, wie in der ersten Ausschleusstelle 67, wiederum der Werkstückträger 64 entweder geradeaus zum Streckenmodul 22 weitergeleitet oder in den zweiten Nebenbahnabschnitt 32 von der Ausschleusstrecke 42 des Ein/Ausschleusmoduls 46 ausgeschleust. Nach dem Durchqueren des Steckenmoduls 22 oder des Nebenbahnabschitts 32 wird der Werkstückträger 64 von der Übergabeeinheit 84 der zweiten Einschleusstelle 70 zum Streckenmodul 23 weitertransportiert.

Die Entscheidung, ob ein Werkstückträger 64 in der Ausschleusstelle eine Geradeausfahrt zum nächsten Streckenmodul durchführt oder in den Nebenbahnabschitt ausgeschleust wird, wird von einer an sich bekannten programmierbaren Steuerung der Fließfertigungsanlage realisiert. Die beschriebene Prozedur des Ausschleusens und des Einschleusens sowie der Übergabe beziehungsweise Weiterleitung des Werkstückträgers 64 erfolgt bei jedem Nebenbahnabschitt in der beschriebenen Weise.

Aufgrund des modularen Aufbaus ist die erfindungsgemäße Fließfertigungsanlage entsprechend der notwendigen Bearbeitungsstationen und deren Reihenfolge jederzeit veränderbar. Zur Umrüstung der Fließfertigungsanlege können die Stationsmodule 51 bis 57 ausgetauscht werden. Es können aber auch für bestimmte Arbeitsaufgaben Stationsmodule vorbereitet werden, die bei Bedarf aus einem Speicher entnommen und in den entsprechenden Nebenbahnabschitt eingekoppelt werden. Es ist ebenfalls möglich, ein oder mehrere Nebenbahnabschnitte aus der Fließfertigungsanlage zu entfernen. Dazu werden das Ausschleusmodul 41 und das Einschleusmodul 43 beziehungsweise das Ein/Ausschleusmodul 46 herausgenommen. Die zwischen den benachbarten Streckenmodulen entstehende Lücke kann beispielsweise mit einer oder zwei Hub/Quereinheiten überbrückt werden. Es ist aber genauso denkbar, weitere Module als Vorrat zu halten, welche lediglich eine Geradeaustransportstrecke besitzen und an die Stelle der Aus-und Einschleusmodule beziehungsweise der Ein/Ausschleusmodule einsetzbar sind. Durch Austausch von Streckenmodulen können Lücken zwischen aufeinanderfolgenden Streckenmodulen geschaffen werden, in die Ausschleusmodule 41, Einschleusmodule 43 und/oder Ein/Ausschleusmodule 46 einkoppelbar sind.

## Patentansprüche

1. Modulare Fließfertigungsanlage mit Transportmitteln zum Transport von Teile beziehungsweise Baugruppen aufnehmenden Werkstückträgern und mit in Förderrichtung hintereinander angeordneten Bearbeitungsstationen, bei der die Transportmittel eine Hauptumlaufbahn aus hintereinander angeordneten Hauptumlaufbahnabschnitten und davon abzweigbare Nebenbahnabschnitte aufweisen und die Nebenbahnabschnitte mit jeweils einer quer zur Hauptumlaufbahn verlaufenden Ausschleusstrecke und Einschleusstrecke ausgeführt sind, zwischen denen eine in Förderrichtung der Hauptumlaufbahn verlaufende Nebentransportstrecke angeordnet ist, wobei die Ausschleusstrecke und die Einschleusstrecke gegenläufige Transportrichtungen haben und wobei die Hauptumlaufbahnabschnitte und/oder die Nebenbahnabschnitte mindestens eine Bearbeitungsstation aufzunehmen vermögen, dadurch gekennzeichnet, daß die Ausschleusstrecke (42) als ein Ausschleusmodul (41) und die Einschleusstrecke (44) als ein Einschleusmodul (43) ausgebildet sind, welche jeweils zwischen zwei hintereinander angeordnete Hauptumlaufbahnabschnitte einkoppelbar sind, daß die Nebentransportstrecke (59) als mindestens ein zwischen das Ausschleusmodul (41) und das Einschleusmodul (43) einsetzbares Stationsmodul (51 bis 57) ausgeführt ist und daß das Einschleusmodul (43) und das Ausschleusmodul (41) zweier unmittelbar aufeinanderfolgender Nebenbahnabschnitte (31 bis 37) zu einem Ein/Ausschleusmodul (46) zusammengefaßt sind.

2. Fließfertigungsanlage nach Anspruch 1, dadurch gekennzeichnet, daß die Hauptumlaufbahnabschnitte auswechselbare Streckenmodule (20 bis 28) sind.

3. Fließfertigungsanlage nach Anspruch 1, dadurch gekennzeichnet, daß das Ausschleusmodul (41) eine Ausschleusstelle (67, 69) und das Einschleusmodul (43) eine Einschleusstelle (68, 70) aufweisen, in denen jeweils eine Übergabeeinheit (81, 82, 83, 84) angeordnet ist, wobei in der Ausschleusstelle (67, 69) die Werkstückträger (64) in die Ausschleusstrecke (42) oder in das angrenzende Streckenmodul weiterleitbar und in der Einschleusstelle (68, 70) die Werkstückträger (64) von der Einschleusstrecke (44) in die Hauptumlaufbahn (10) überführbar sind.

4. Fließfertigungsanlage nach Anspruch 1, dadurch gekennzeichnet, daß das Ausschleusmodul (41) und das Einschleusmodul (43) angrenzend zur Nebentransportstrecke (59) jeweils über eine Übergabestelle (71, 72, 73, 74) verfügt, in der eine weitere Übergabeeinheit (85, 86, 87, 88) angeordnet ist, wobei die Übergabeeinheit (85, 87) der Ausschleusstrecke (42) den Werkstückträger (64) zur Nebentransportstrecke (59) weiterleitet und die Übergabeeinheit (86, 88) der Einschleusstrecke (44) den Werkstückträger (64) von der Nebentransportstrecke (59) übernimmt.

5. Fließfertigungsanlage nach Anspruch 3 und 4, dadurch gekennzeichnet, daß die Übergabeeinheiten (81 bis 88) jeweils Hub/Quereinheiten mit einem heb- und senkbar angeordneten Umsetzband (90) sind.

6. Fließfertigungsanlage nach Anspruch 1, dadurch gekennzeichnet, daß als Transportmittel für die Hauptumlaufbahn (10) und die Nebenbahnabschnitte (31 bis 37) Doppelgurtförderer vorgesehen sind.

7. Fließfertigungsanlage nach Anspruch 6, dadurch gekennzeichnet, daß jeder Modul über einen eigenen Antrieb für das Transportmittel verfügt.

8. Fließfertigungsanlage nach Anspruch 1, dadurch gekennzeichnet, daß die zum Einsetzen eines Ausschleusmoduls (41) und eines Einschleusmoduls (43) vorgesehene Lücke zwischen zwei aufeinanderfolgende Hauptumlaufbahnabschnitte mit einem Brückenmodul überbrückbar ist.

9. Modulare Fließfertigungsanlage mit Transportmitteln zum Transport von Teile beziehungsweise Baugruppen aufnehmenden Werkstückträgern und mit in Förderrichtung hintereinander angeordneten Bearbeitungsstationen, bei der die Transportmittel eine Hauptumlaufbahn aus hintereinander angeordneten Hauptumlaufbahnabschnitten und davon abzweigbare Nebenbahnabschnitte aufweisen und die Nebenbahnabschnitte mit jeweils einer quer zur Hauptumlaufbahn verlaufenden Ausschleusstrecke und Einschleusstrecke ausgeführt sind, zwischen denen eine in Förderrichtung der Hauptumlaufbahn verlaufende Nebentransportstrecke angeordnet ist, wobei die Ausschleusstrecke und die Einschleusstrecke gegenläufige Transportrichtungen haben und wobei die Hauptumlaufbahnabschnitte und/oder die Nebenbahnabschnitte mindestens eine Bearbeitungsstation aufzunehmen vermögen, dadurch gekennzeichnet, daß die Einschleusstrecke (44) und die Ausschleusstrecke (42) zweier unmittelbar aufeinanderfolgender Nebenbahnabschnitte (31 bis 37) zu einem zwischen die hintereinander angeordneten Nebenbahnabschnitte (31 bis 37) einkoppelbaren Ein/Ausschleusmodul (46) zusammengefaßt sind.

10. Fließfertigungsanlage nach Anspruch 9, dadurch gekennzeichnet, daß die zwischen der Ausschleusstrecke (42) und der Einschleusstrecke (44) eines Nebenbahnabschnittes (31 bis 37) angeordnete Nebentransportstrecke (59) als mindestens ein auswechselbares Stationsmodul (51 bis 57) ausgeführt ist.

11. Fließfertigungsanlage nach Anspruch 9, dadurch gekennzeichnet, daß die Einschleusstrecke (44) eine Einschleusstelle (68) und die Ausschleusstrecke (42) eine Ausschleusstelle (69) aufweisen, in denen jeweils eine Übergabeeinheit (82, 83) angeordnet ist, wobei in der Einschleusstelle (68) die Werkstückträger (64) von der Einschleusstrecke (44) zur Ausschleusstelle (69) überführbar und in der Ausschleusstelle (69) die Werkstückträger (64) in die Ausschleusstrecke (42) oder in das angrenzende Streckenmodul (20 bis 28) weiterleitbar sind.

12. Fließfertigungsanlage nach Anspruch 9, dadurch gekennzeichnet, daß die Einschleusstrecke (44) und die Ausschleusstrecke (42) angrenzend zur Nebentransportstrecke (59) jeweils über eine Übergabestelle (72, 73) verfügen, in der jeweils eine weitere Übergabeeinheit (86, 87) angeordnet ist, wobei die Übergabeeinheit (86) der Einschleusstrecke (44) den Werkstückträger (64) von der vorgelagerten Nebentransportstrecke (59) übernimmt und zur Übergabeeinheit (87) der Ausschleusstrecke (42) zu überführen vermag und die Übergabeeinheit (87) der Ausschleusstrecke (42) den Werkstückträger (64) zur in Förderrichtung angrenzenden Nebentransportstrecke (59) weiterleitet.

## Claims

1. Modular assembly-line production system having transporting means for transporting workpiece carriers accommodating parts and/or subassemblies, and having processing stations arranged one behind the other in the conveying direction, in which system the transporting means have a main circulatory path made of main-circulatory-path sections arranged one behind the other and secondary-path sections which can branch off therefrom, and the secondary-path sections are designed in each case with a charging route and discharging route which run transversely to the main circulatory path and between which there is arranged a secondary transporting route running in the conveying direction of the main circulatory path, it being the case that the discharging route and the charging route have opposite transporting directions, and it being the case that the main-circulatory-path sections and/or the secondary-path sections can accommodate at least one processing station, characterized in that the discharging route (42) is designed as a discharging module (41) and the charging route (44) is designed as a charging module (43), which can be incorporated in each case between two main-circulatory-path sections arranged one behind the other, in that the secondary transporting route (59) is designed as at least one station module (51 to 57) which can be inserted between the discharging module (41) and the charging module (43), and in that the charging module (43) and the discharging module (41) of two directly successive secondary-path sections (31 to 37) are combined to form a charging/discharging module (46).

2. Assembly-line production system according to Claim 1, characterized in that the main-circulatory-path sections are exchangeable route modules (20 to 28).

3. Assembly-line production system according to Claim 1, characterized in that the discharging module (41) has a discharging location (67, 69) and the charging module (43) has a charging location (68, 70) in which there is arranged in each case one transfer unit (81, 82, 83, 84), it being possible, in the discharging location (67, 69), for the workpiece carriers (64) to be passed on into the discharging route (42) or into the adjacent route module and, in the charging location (68, 70), for the workpiece carriers (64) to be transferred from the charging route (44) into the main circulatory path (10).

4. Assembly-line production system according to Claim 1, characterized in that the discharging module (41) and the charging module (43), adjacent to the secondary transporting route (59), each have a transfer location (71, 72, 73, 74) in which there is arranged a further transfer unit (85, 86, 87, 88), the transfer unit (85, 87) of the discharging route (42) passing on the workpiece carrier (64) to the secondary transporting route (59), and the transfer unit (86, 88) of the charging route (44) receiving the workpiece carrier (64) from the secondary transporting route (59).

5. Assembly-line production system according to Claims 3 and 4, characterized in that the transfer units (81 to 88) in each case are lifting/transverse units with a transfer belt (90) which is arranged such that it can be raised and lowered.

6. Assembly-line production system according to Claim 1, characterized in that double-belt conveyors are the transporting means provided for the main circulatory path (10) and the secondary-path sections (31 to 37).

7. Assembly-line production system according to Claim 6, characterized in that each module has a dedicated drive for the transporting means.

8. Assembly-line production system according to Claim 1, characterized in that the gap which is provided between two successive main-circulatory-path sections for the introduction of a discharging module (41) and a charging module (43) can be bridged by a bridging module.

9. Modular assembly-line production system having transporting means for transporting workpiece carriers accommodating parts and/or subassemblies, and having processing stations arranged one behind the other in the conveying direction, in which system the transporting means have a main circulatory path made of main-circulatory-path sections arranged one behind the other and secondary-path sections which can branch off therefrom, and the secondary-path sections are designed in each case with a charging route and discharging route which run transversely to the main circulatory path and between which there is arranged a secondary transporting route running in the conveying direction of the main circulatory path, it being the case that the discharging route and the charging route have opposite transporting directions, and it being the case that the main-circulatory-path sections and/or the secondary-path sections can accommodate at least one processing station, characterized in that the charging route (44) and the discharging route (42) of two directly successive secondary-path sections (31 to 37) are combined to form a charging/discharging module (46) which can be incorporated between the secondary-path sections (31 to 37) arranged one behind the other.

10. Assembly-line production system according to Claim 9, characterized in that the secondary transporting route (59), which is arranged between the discharging route (42) and the charging route (44) of a secondary-path section (31 to 37), is designed as at least one exchangeable station module (51 to 57).

11. Assembly-line production system according to Claim 9, characterized in that the charging route (44) has a charging location (68) and the discharging route (42) has a discharging location (69), in which there is arranged in each case one transfer unit (82, 83), it being possible, in the charging location (68), for the workpiece carriers (64) to be transferred from the charging route (44) into the discharging location (69) and, in the discharging location (69), for the workpiece carriers (64) to be passed on into the discharging route (42) or into the adjacent route module (20 to 28).

12. Assembly-line production system according to Claim 9, characterized in that the charging route (44) and the discharging route (42), adjacent to the secondary transporting route (59), each have a transfer location (72, 73) in which there is arranged in each case one further transfer unit (86, 87), the transfer unit (86) of the charging route (44) receiving the workpiece carrier (64) from the upstream secondary transporting route (59) and being capable of transferring it to the transfer unit (87) of the discharging route (42), and the transfer unit (87) of the discharging route (42) passing on the workpiece carrier (64) to the secondary transporting route (59) which is adjacent in the conveying direction.

## Revendications

1. Installation modulaire de fabrication en continu comportant les moyens de transport des porte-pièces recevant des pièces ou des ensembles et des postes de travail placés les uns derrière les autres dans la direction de transfert, les moyens de transport comprenant un chemin de circulation principal formé de la juxtaposition les uns derrière les autres de segments de chemins de circulation principaux, et des segments de chemins auxiliaires qui en dérivent, les segments de chemins auxiliaires étant réalisés chacun avec un chemin d'entrée et un chemin de sortie dirigés transversalement au chemin de circulation principal, et entre lesquels se trouve un chemin de transport auxiliaire circulant dans la direction de transfert du chemin de circulation principal,
le chemin de sortie et le chemin d'entrée ayant des directions de transport opposées, et les segments de chemins de circulation principaux et/ou les segments de chemins de circulation auxiliaires pouvant recevoir au moins un poste de travail,
caractérisée en ce que
le chemin de sortie (42) est en forme de module de sortie (41) et le chemin d'entrée (44) sous forme de module d'entrée (43), ces modules pouvant être couplés entre deux segments de chemin de circulation principal, placés l'un derrière l'autre,
le chemin de transport auxiliaire (59) est réalisé au moins comme un module de station (51-57) qui peut s'intégrer entre le module de sortie (41) et le module d'entrée (43),et
le module d'entrée (43) et le module de sortie (41) de deux segments de chemins auxiliaires (31-37) qui se suivent directement, sont réunis en un module d'entrée/sortie (46).

2. Installation de fabrication en continu selon la revendication 1,
caractérisée en ce que
les segments de chemins de circulation principaux sont des modules de chemins (20-28) interchangeables.

3. Installation de fabrication en continu selon la revendication 1,
caractérisée en ce que
le module de sortie (41) comporte un point de sortie (67, 69) et le module d'entrée (43) un point d'entrée (68, 70) dans lesquels il y a chaque fois une unité de transfert (81, 82, 83, 84), et
au point de sortie (67, 69) les porte-pièces (64) peuvent continuer dans le chemin de sortie (42) ou dans le module de chemin adjacent, et au point d'entrée (68, 70), les
porte-pièces (64) sont transférés du chemin d'entrée (44) dans le chemin de circulation principal (10).

4. Installation de fabrication en continu selon la revendication 1,
caractérisée en ce que
le module de sortie (41) et le module d'entrée (43) disposent de manière adjacente au chemin de transport auxiliaire (59), chaque fois un point de transfert (71, 72, 73, 74) dans lequel il y a une première unité de transfert (85, 86, 87, 88),
l'unité de transfert (85, 87) du chemin de sortie (41) transportant le porte-pièces (64) vers le chemin de transport auxiliaire (59), et l'unité de transfert (86, 88) du chemin d'entrée (44) reprenant le porte-pièces (64) du chemin de transport auxiliaire (59).

5. Installation de fabrication en continu selon les revendications 3 et 4,
caractérisée en ce que
les unités de transfert (81-88) sont chacune une unité transversale ou une unité de relevage avec une bande de transfert (90) susceptible d'être relevée ou abaissée.

6. Installation de fabrication en continu selon la revendication 1,
caractérisée en ce que
les moyens de transport pour le chemin de circulation principal (10) et les segments de chemins auxiliaires (31-37) sont des transporteurs à double courroie.

7. Installation de fabrication en continu selon la revendication 6,
caractérisée en ce que
chaque module possède son propre entraînement pour le moyen de transport.

8. Installation de fabrication en continu selon la revendication 1,
caractérisée en ce que
l'intervalle entre deux segments de chemin de circulation principale successifs, prévu pour recevoir un module de sortie (41) et un module d'entrée (43), peut être occupé par un module formant un pont.

9. Installation modulaire de fabrication en continu comportant les moyens de transport des porte-pièces recevant des pièces ou des ensembles et des postes de travail placés les uns derrière les autres dans la direction de transfert, les moyens de transport comprenant un chemin de circulation principal formé de la juxtaposition les uns derrière les autres de segments de chemins de circulation principaux, et des segments de chemins auxiliaires qui en dérivent, les segments de chemins auxiliaires étant réalisés chacun avec un chemin d'entrée et un chemin de sortie dirigés transversalement au chemin de circulation principal, et entre lesquels se trouve un chemin de transport auxiliaire circulant dans la direction de transfert du chemin de circulation principal, le chemin de sortie et le chemin d'entrée ayant des directions de transport opposées, et les segments de chemins de circulation principaux et/ou les segments de chemins de circulation auxiliaires pouvant recevoir au moins un poste de travail,
caractérisée en ce que
le chemin d'entrée (44) et le chemin de sortie (42) de deux segments de chemins auxiliaires (31-37) directement successifs sont réunis en un module d'entrée/sortie (46) qui peut être intégré entre les segments de chemins auxiliaires (31-37) placés l'un derrière l'autre.

10. Installation de fabrication en continu selon la revendication 9,
caractérisée en ce que
le chemin de transport auxiliaire (59), prévu entre le chemin de sortie (42) et le chemin d'entrée (44) d'un segment de chemin auxiliaire (31-37), est réalisé au moins comme un module de station (51-57) interchangeable.

11. Installation de fabrication en continu selon la revendication 9,
caractérisée en ce que
le chemin d'entrée (44) comporte un point d'entrée (68) et le chemin de sortie (42) un point de sortie (69) dans lesquels se trouve chaque fois une unité de transfert (82, 83), et
au point d'entrée (68), les porte-pièces (64) sont transférés du chemin d'entrée (44) vers le point de sortie (69), et au point de sortie (69) les porte-pièces (64) sont transmis au chemin de sortie (42) ou à un module de chemin (20-28) adjacent.

12. Installation de fabrication en continu selon la revendication 9,
caractérisée en ce que
le chemin d'entrée (44) et le chemin de sortie (42) disposent de manière adjacente au chemin de transport auxiliaire (59), chaque fois d'un point de transfert (72, 73) dans lequel il y a chaque fois une autre unité de transfert (86, 87) ,
l'unité de transfert (86) du chemin d'entrée (44) prenant le porte-pièces (64) du chemin de transport auxiliaire (59) en amont et pouvant le faire passer dans l'unité de transfert (87) du chemin de sortie (42), et
l'unité de transfert (87) du chemin de sortie (42) transmettant le porte-pièces (64) dans le chemin de transport auxiliaire (59) adjacent dans la direction de transfert.
